# EUROPÄISCHE PATENTSCHRIFT

(11) **EP 1 175 556 B1**
(45) Veröffentlichungstag und Bekanntmachung des Hinweises auf die Patenterteilung: **07.06.2006**
(21) Anmeldenummer: 00927031.5
(22) Anmeldetag: 20.04.2000
(51) Int. Cl.: F02D 9/10

(54) **SCHALTKLAPPENVERBAND AUS MONTAGEGESPRITZTEN SCHALTKLAPPEN ODER KLAPPENMODULEN**
CONTROL VALVE ASSEMBLY CONSISTING OF CONTROL VALVES OR VALVE MODULES INJECTION-MOULDED AT THE TIME OF MOUNTING
ENSEMBLE VOLETS DE COMMANDE CONSTITUE DE VOLETS DE COMMANDE, MOULES PAR INJECTION AU MOMENT DU MONTAGE, OU DE MODULES A VOLETS

(30) Priorität: 24.04.1999 DE 19918777
(43) Veröffentlichungstag der Anmeldung: 30.01.2002
(73) Patentinhaber: Mann + Hummel GmbH, 71638 Ludwigsburg (DE)
(72) Erfinder: RENTSCHLER, Klaus, D-71126 Gäufelden (DE); NEUSCHWANDER, Helmut, D-71636 Ludwigsburg (DE)
(74) Vertreter: Voth, Gerhard
(86) Internationale Anmeldenummer: PCT/EP2000/003673
(87) Internationale Veröffentlichungsnummer: WO 2000/065214

(56) Entgegenhaltungen:
- DE-A- 4 323 078
- DE-A- 19 615 438
- DE-U- 29 913 538
- US-A- 3 774 879
- US-A- 3 897 524
- US-A- 4 860 706
- US-A- 5 715 782

## Beschreibung

Die Erfindung betrifft einen Schaltklappenverband, der aus mindestens zwei montagegespritzten Schaltklappen besteht, nach der Gattung des Patentanspruches 1 (siehe US-A-5 715 782).

### Stand der Technik

Die Verwendung montagegespritzter Schaltklappen zum Beispiel im Kraftfahrzeugbereich ist bekannt. Der Figur 5 in der EP 482 272 B1 läßt sich das Fertigungsverfahren von montagegespritzten Schaltklappen entnehmen. Diese werden in einer Form hergestellt, wobei Kerneinsätze 3, 4, 7, 8 sich in der Form derart bewegen lassen, daß Klappenflügel und Welle einteilig in den bereits gespritzten Klappenrahmen hergestellt werden können. Da die Kunststoffe von Klappenflügeln und Klappenrahmen nicht aneinander haften, lassen sich diese in dem fertigen Bauteil bewegen.

Die montagegespritzten Schaltklappen können als Einzelbauteile oder zusammengeschlossen zu einem Verband zum Beispiel in Saugrohren verwendet werden. Gemäß der EP 747 587 A1 wird zum Beispiel eine Reihenschaltung von montagegespritzten Schaltklappen vorgeschlagen, wobei diese eine gemeinsame Drehachse aufweisen (vergleiche Figur 3). Diese werden durch Kurbeln 17, 18 miteinander verbunden, wobei an den Enden der Kurbeln eine Steckverbindung 19, 20 vorgesehen ist. Durch Vorsehen der Kurbel können genügend große Momente für die Betätigung der Klappe übertragen werden.

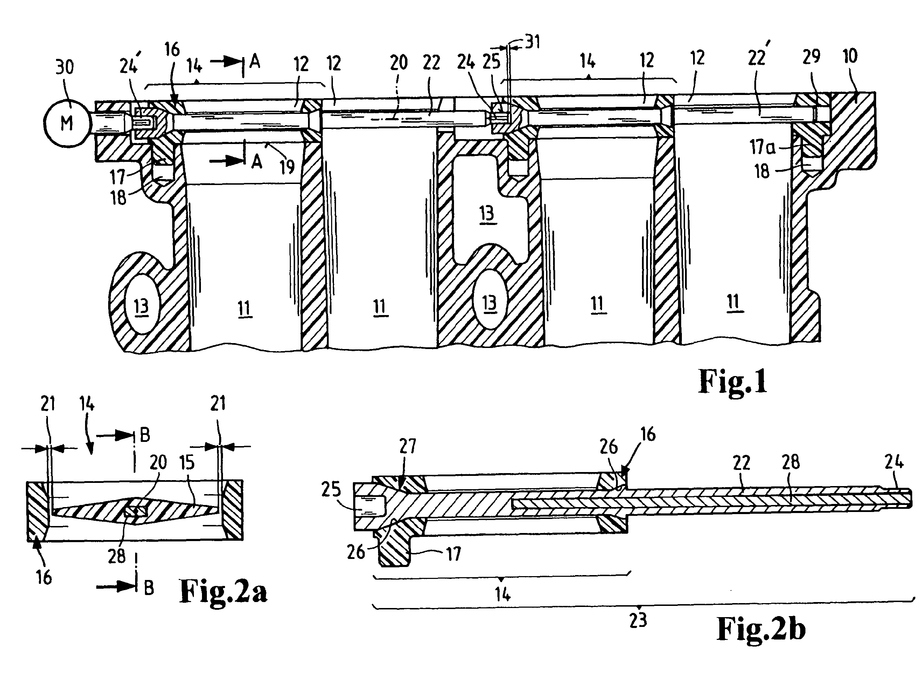

Außerdem kann durch verlagern der Verbindung aus der Drehachse heraus eine genügende Winkelgenauigkeit zwischen den Schaltklappen erzeugt werden. Ein derartiger Verband von Schaltklappen weist jedoch auch Nachteile auf. Durch vorsehen der Kurbeln steigt der Materialaufwand für das Bauteil und somit letztlich auch dessen Bauteilkosten. Außerdem benötigen die Kurbeln als bewegliches Bauteil einen Aktionsraum, der am Einbauort zur Verfügung stehen muß. In der beschriebenen Anwendung ist dies zwar möglich, da die Schaltklappen an den Sammelraum eines Saugrohres angrenzen (vergleiche Figur 1). Es gibt jedoch auch Anwendungsfälle wo der Bauraum stark begrenzt ist.

Insbesondere wenn die Schaltklappen in den Ansaugkanälen des Saugrohres kurz vor den Zylindereinlässen angeordnet werden sollen, sind hier die Platzverhältnisse wegen der Vielzahl von Funktionskomponenten, z. B. den Einlaßventilen stark begrenzt. Bei mehreren Ansaugkanälen pro Zylinder soll zudem häufig eine selektive Kanalabschaltung erreicht werden. In diesem Fall würden die Kurbeln bei einer gemeinsamen Drehachse aller Klappen genau im Bereich des zweiten, nicht schaltbaren Saugkanals liegen und dort abhängig von ihrer Stellung die Strömung im Saugkanal negativ beeinflussen. In diesen Fällen muß also auf einer Ausführung des Klappenverbandes in Metall zurückgegriffen werden, da die größere Steifigkeit dieses Werkstoffes die Anordnung der Schaltklappen auf einer Welle erlaubt. Eine solche Anordnung ist z. B. aus der US 5 603 269 bekannt. Die Schaltklappen werden z. B. mit Hilfe von Schrauben auf der Welle montiert. Im Vergleich zu einem montagegespritzten Schaltklappenverband ergeben sich jedoch höhere Fertigungskosten. Außerdem ist die Montage aufwendiger, da zur Einbringung des Klappenverbandes das Saugrohrgehäuse in der Drehebene der Klappen geteilt werden muß.

Aufgabe ist es daher einen montagegespritzten Schaltklappenverband zu schaffen, der eine Betätigung dieses Verbandes auf engstem Bauraum ermöglicht. Diese Aufgabe wird durch die Merkmale des Patentanspruches 1 gelöst.

Der erfindungsgemäße Schaltklappenverband besteht aus mehreren Schaltklappen oder Klappenmodulen, die z. B. für die Drosselung von Saugkanälen eines Saugrohres für eine Brennkraftmaschine verwendet werden können. Wenn im weiteren Verlauf von Schaltklappen die Rede ist, soll davon ausgegangen werden, daß diese auch als Klappenmodule zum Beispiel in montagegespritzten Einheiten ausgeführt sein können. Die Schaltklappen sind montagegespritzt und bestehen aus Klappenflügeln, wobei hiermit der gesamte in dem Klappenrahmen bewegliche Teil, inklusive der die Lagerung bildenden Wellenansätze gemeint ist. Als Kraftübertragung zwischen den Klappenflügeln ist eine Welle vorgesehen, die für eine simultane Verdrehung der Klappenflügel verdreht werden kann. Diese Welle liegt daher genau in der Drehachse der Klappenflügel was einen geringen Platzbedarf für den Schaltklappenverband zur Folge hat. Dieser kann daher Platz sparend z. B. in die zu den Zylinder führenden Saugkanälen eines Saugrohres eingebaut werden. Dabei ist auch die Verwirklichung einer selektiven Kanalabschaltung bei mehreren Saugkanälen pro Zylinder möglich. In diesem Fall verläuft die Klappenwelle jeweils durch die nicht schaltbaren Saugkanäle. Weiterhin ist vorgesehen, den Schaltklappenverband aus einzelnen Klappenmodulen aufzubauen. Diese bestehen bevorzugt aus einer einzelnen Schaltklappe, können aber auch z. B. zu Verbänden von zwei Schaltklappen zusammengefasst werden. Das Klappenmodul weist weiterhin mindestens eine Wellenaufnahme auf, um die Verbindung zu benachbarten Klappenmodulen zu ermöglichen. Es ist vorteilhaft, die Klappenmodule weiterhin mit einem angespritzten Wellenansatz zu versehen. Der Wellenansatz wird in der Länge so gewählt, dass er die Distanz zum nächsten Klappenmodul überwindet. Am Ende ist der Wellenansatz mit einem Wellenzapfen versehen, der in die bereits beschriebene Wellenaufnahme des nächsten Moduls eingreift. Dadurch entsteht eine verdrehsichere Verbindung, so dass das Schaltmoment vom Antrieb auf alle Klappen übertragen werden kann. Selbstverständlich ist es auch möglich die Wellenaufnahme im Wellenansatz vorzusehen und ein Wellenzapfen an das benachbarte Klappenmodul anzuspritzen. Die direkte Momentenübertragung zwischen den Klappenmodulen durch einen angespritzten Wellenansatz aus Kunststoff setzt voraus, dass das Betätigungsmoment der einzelnen Klappen so niedrig ist, dass die geforderten Winkeltoleranzen zwischen den einzelnen Klappen eingehalten werden Können. Es ist ebenfalls vorgesehen, in die Wellenansätze ein Einlegeteil mit höherer Verdrehsteifigkeit einzuspritzen. Dies kann z. B. aus einem Stahlrohr bestehen. Insgesamt erhöht sich dadurch die Verdrehsteifigkeit des Schaltklappenverbandes, wodurch auch die Übertragung höherer Schaltmomente möglich wird. Im Falle geringer Schaltmomente lässt sich durch die beschriebene Maßnahme die WinKelgenauigkeit zwischen den einzelnen Klappen noch erhöhen- Das Einlegeteil hat weiterhin den Vorteil, dass die durch die Betriebstemperaturen bedingte Ausdehnung der Wellenansätze zwischen den Klappenmodulen in Grenzen gehalten wird.

Gemäß einer günstigen Ausführungsform der Erfindung ist die beidseitige Lagerung der Klappenflügel im Klappenrahmen zumindest auf einer Seite konisch ausgeführt. Diese konische Lagerung wird gebildet aus der Klappenwelle und der in der Klappe befindlichen Aufnahmebohrung. Die konische Außenkontur der Klappenwelle im Bereich der Lagerung wird bevorzugt durch die Spritzgießkomponente gebildet, aus der auch die Klappenflügel hergestellt werden. Die Aufnahmebohrung im Klappenrahmen muß nicht durch Bohren hergestellt werden. Genauso ist eine urformende Herstellung durch entsprechende Kerneinsätze im Spritzgießwerkzeug denkbar. Die Aufnahmebohrung im Klappenrahmen muß dann einen entsprechenden Konus aufweisen, der mit der Klappenwelle korrespondiert.
Der Konus kann seine Öffnung zum Äußeren des Klappenrahmens hin oder zum Inneren des Klappenrahmens hin aufweisen. Welche Öffnungsrichtung im Einzelfall sinnvoller ist hängt von der Wahl der Werkstoffe ab, wie im Folgenden genauer erläutert wird.

Im Normalfall wird die Klappe bei einer Verringerung der Temperatur bzw. Luftfeuchtigkeit stärker schwinden als der Klappenrahmen. Dies ist der Anwendungsfall in dem der Konus in Klappenwelle und Klappenrahmen sinnvollerweise mit einer Öffnungsrichtung nach außen versehen wird. Die Schrumpfung der Klappenwelle weist eine axiale und eine radiale Komponente auf. Die radiale Schrumpfungskomponente vergrößert bzw. erzeugt einen Spalt zwischen der konischen Aufnahme im Klappenrahmen und der Klappenwelle. Gleichzeitig führt jedoch die axiale Schrumpfung der Klappenwelle zu einer Verkürzung der Achse und dadurch zu einer Kompensation des entstandenen Spaltes. Hierzu ist es notwendig, daß die Klappenwelle axial festgelegt ist. Dies kann sinnvollerweise durch Vorsehen eines zweiten konischen Bereiches am anderen Ende der Klappenwelle erfolgen. Die axiale Festlegung kann aber auch durch einen Absatz auf der Welle gewährleistet werden. Eine axiale Festlegung der Klappenwelle ist natürlich auch durch die Klappenflügel gegeben. Diese begrenzen das Axialspiel der Klappenwelle in der Öffnung des Klappenrahmens.

Der Öffnungswinkel des Konus kann in Abhängigkeit der verwendeten Werkstoffe und den Abmessungen der Schaltklappe derart gewählt werden, daß sich die axiale und radiale Schrumpfungskomponente der Klappenwelle ausgleichen. Alternativ hierzu läßt sich der Öffnungswinkel jedoch auch so wählen, daß bei abnehmender Temperatur eine leichte axiale Verspannung der Klappenwelle erfolgt. Auf diese Weise lassen sich Toleranzen in Klappenwelle und Klappenrahmen ausgleichen, wobei über den Toleranzbereich eine spielfreie Lagerung der Klappenwelle im Klappenrahmen gewährleistet ist. Das Untermaß der Klappenwelle im Tieftemperaturbereich sorgt dann gleichzeitig für einen Verschleißausgleich.

Der wesentliche Vorteil der konischen Gestaltung der Lagerungen ist jedoch eine Begrenzung der Lagerreibung unabhängig von der Betriebstemperatur. Hierdurch lassen sich auch die zur Verstellung der Klappen notwendigen Betätigungsmomente in Grenzen halten. Dadurch wird der günstige Effekt erreicht, daß auch bei geringer Verdrehsteifigkeit der Betätigungswelle, wie sie z. B. bei einer Kunststoffausführung vorliegt, hoher Anforderung an den Winkelversatz zwischen den Schaltklappen erfüllt werden können. Geringe Schaltkräfte wirken sich natürlich auch auf die Dimensionierung des Klappenantriebs aus, der unter diesen Bedingungen kleiner Dimensioniert werden kann. Dies spart Gewicht sowie Kosten bei der Herstellung und kann über dies eine Bedingung dafür sein, daß sich der Klappenantrieb mit Hilfe des im Saugrohr herrschenden Unterdrucks antreiben läßt.

Eine weitere Ausgestaltung der Erfindung sieht vor, daß die Klappenrahmen mit Positionierungszapfen versehen sind. Diese korrespondieren mit entsprechenden Löchern in den Aufnahmen für den Schaltklappenverband, so daß die Montage vereinfacht wird. Weiterhin Ist eine genaue Passung dann nur zwischen Löchern und Positionierungszapfen notwendig, während die Aufnahmen gröber toleriert sein können. Dies wirkt sich vorteilhaft auf die Wirtschaftlichkeit in der Herstellung des Saugrohres aus. Weisen die Positionierungszapfen gegenüber den Löchern vorteilhafter Weise ein Übermaß auf, so wird der Schaltklappenverband durch einstecken in die Löcher bereits fixiert. Er kann bei der Handhabung des Saugrohrs vor der Montage nicht herausfallen. Im endmontierten Zustand des Saugrohrs wird der Schaltklappenverband durch die anliegenden Dichtungen in seiner Position fixiert.

Eine konstruktive Maßnahme hinsichtlich der Axialausdehnung der Wellenansätze ist die Vorsehung eines Axialspielausgleiches zwischen Wellenzapfen und Wellenaufnahme. Der Axialspielausgleich kann gleichzeitig zum Ausgleich von fertigungsbedingten Bauteiltoleranzen in axialer Richtung genutzt werden. Die Klappenmodule können dadurch gröber toleriert werden, was deren Wirtschaftlichkeit steigert.

Durch Verwendung von Klappenmodulen läßt sich eine vielseitige Verwendbarkeit der Baugruppen erzielen. Es ist eine Verwendung der Schaltklappen im gesamten Kraftfahrzeugbereich denkbar. Drosselklappen werden z. B. für die Belüftung des Fahrgastinnenraums benötigt. Die Klappenmodule können auch mit zwei Wellenaufnahmen versehen werden, wobei die Zwischenräume zwischen den Klappenmodulen dann mit kurzen Wellenstutzen überbrückt werden müssen, die als Einzelteil hergestellt werden. Hierdurch läßt sich eine größere Flexibilität für die Verwendung der Klappenmodule bei unterschiedlichen Schaltklappenabständen erreichen. Außerdem benötigt die äußerste der Schaltklappen keinen Wellenansatz, da diese keine benachbarte Welle mehr anzutreiben hat. Dafür muß die erste der Schaltklappen mit den Antrieb verbunden werden, damit eine Verstellung der Schaltklappen überhaupt möglich wird.

### Zeichnung

Weitere Einzelheiten der Erfindung werden in den Zeichnungen anhand von schematischen Ausführungsbeispielen beschrieben. Hierbei zeigen
- Figur 1: den Schnitt durch die Saugkanäle eines sonst nicht dargestellten Saugrohres mit zwei Saugkanälen pro Zylinder,
- Figur 2a: den Schnitt A-A gemäß Figur 1 durch ein Klappenmodul,
- Figur 2b: den Schnitt B-B durch ein Klappenmodul gemäß Figur 2a,

Für die Herstellung des Schaltklappenverbandes mit einteiliger Betätigungswelle ist eine Modifizierung bisher bekannter Montagespritzgießverfahren notwendig. Das zur Anwendung kommende Formwerkzeug muß die gleichzeitige Herstellung zumindest aller in einem Schaltklappenverband zur Anwendung kommenden Schaltklappen ermöglichen. Dies wird dadurch erreicht, daß die Formteile für jeweils eine Schalklappe zu einem Formnest zusammengefaßt werden, wobei diese Formnester drehbar auf dem Formwerkzeug gelagert sind. Die Aufnahmen für die Welle werden durch Kerneinsätze gebildet, die seitlich in die Formnester eingesteckt sind und vor dem eingießen der Welle entfernt werden müssen. Hierzu ist in axialer Richtung bezogen auf die Welle ein gewisser Betätigungsfreiraum für die Kerneinsätze notwendig, da dieser aufgrund des geforderten Abstandes zwischen den Schaltklappen im allgemeinen nicht gegeben ist, können die Formnester entsprechend der optimalen Zugänglichkeit für die Handhabungswerkzeuge verdreht werden. Es bietet sich an, die Klappenrahmen in einer Stellung der Formnester zu fertigen, in der die Ausrichtung der in den Klappenrahmen befindlichen Löcher 90° zur Ausrichtung der gemeinsamen Klappenwelle beträgt. In dieser Stellung können die stiftförmigen Formteile ohne großen Aufwand aus den zugehörigen Aufnahmen ausgeführt werden und sogar aufgrund der identischen Aushebebewegung in allen Formnestern auf einem Handhabungsgerät zusammengefasst werden. Anschließend können die Fenster um 90° gedreht werden, so daß die Welle in die Aufnahmen der einzelnen Schaltklappen eingeführt werden kann.

### Beschreibung der Ausführungsbeispiele

In Figur 1 ist der Ausschnitt eines Saugrohres im Schnitt dargestellt und zwar derjenige Teil, der einen Flansch 10 zur Befestigung am Zylinderkopf einer nicht dargestellten Brennkraftmaschine aufweist. In diesem Bereich des Saugrohres führen Saugkanäle 11 von einem nicht dargestellten Sammelraum zu zylinderseitigen Austritten 12, wobei jeweils zwei Saugkanäle für einen Zylinder der Brennkraftmaschine vorgesehen sind. Zwischen den Saugkanälen können Kühlmittelkanäle 13 angeordnet sein.

Jeweils einer der beiden zu den Zylindern führenden Saugkanäle 11 läßt sich durch eine Schaltklappe 14 verschließen. Die Schaltklappen bestehen aus Klappenflügeln 15, die in einen Klappenrahmen montagegespritzt sind. An den Schaltklappenrahmen ist weiter ein Positionierungszapfen 17 angebracht, mit dessen Hilfe diese durch einstecken in Löcher 18 in Aufnahmen 19 des Saugrohrs fluchtend positioniert werden.

In Figur 2a läßt sich der Aufbau der Schaltklappen 14 entnehmen. Die Klappenflügel 15 sind in einer Drehachse 20 gelagert, die durch den Klappenrahmen 16 verläuft. Durch die Schrumpfung der montagegespritzten Klappe 15 nach deren Herstellung durch Montagespritzen im Klappenrahmen 16entsteht ein schmaler Spalt 21 zwischen Schaltklappe und Rahmen. Dieser gewährleistet eine einwandfreie Funktion der Schaltklappen und ermöglicht gewisse Winkeltoleranzen zwischen den einzelnen Schaltklappen. Für den Fall des Auftretens von Winkeltoleranzen verkleinert sich sogar der Spalt um einen gewissen Betrag, da die Diagonale im Querschnitt der Klappe länger ist, als der Durchmesser der waagerecht im Klappenrahmen stehende Schaltklappe.

In Figur 2b läßt sich erkennen, wie die Schaltklappe 14 durch anspritzen eines Wellenansatzes 22 zu einem Klappenmodul 23 ergänzt werden kann. Der Wellenansatz weist an seinem Ende einen Wellenzapfen 24 auf, der in die Wellenaufnahme eines nicht dargestellten benachbarte Klappenmoduls eingesteckt werden kann. Das dargestellte Klappenmodul weist ebenfalls eine Wellenaufnahme 25 auf, die zur Aufnahme des Wellenzapfens eines nicht dargestellten benachbarten Klappenmoduls geeignet ist. Der Wellenansatz 22 ist mit den Klappenflügeln 15 einteilig hergestellt. Dieses Bauteil weist Koni 26 auf, die mit Lagerungen 27 im Klappenrahmen 16 korrespondieren. Zur Erhöhung der Drehsteifigkeit des Wellenansatzes 22 kann ein Einlegeteil 28 aus Stahl zum Einsatz kommen, welches im Montagespritzgießverfahren umspritzt wird.

Bei nochmaliger Betrachtung der Figur 1 wird ein Einbaubeispiel für die Klappenmodule 23 deutlich. Es kommen hier zwei Klappenmodule zum Einsatz, wobei der um den Wellenzapfen gekürzte Wellenansatz 22' in ein Abschußlager 29 eingebracht ist. Dieses kann wie bereits für die Klappenrahmen beschrieben über einen Positionierungszapfen 17a in einem weiteren Loch 18 des Saugrohrs fixiert werden. Die Wellenaufnahme 24' des anderen zum Einsatz kommenden Klappenmoduls wird für die Anbindung eines schematisch dargestellten Antriebsmotors 30 verwendet. Somit ergibt sich ein Schaltklappenverband, der um die Drehachse 20 verstellt werden kann. Mit dessen Hilfe wird jeder zweite der Saugkanäle 11 verschlossen und geöffnet, wobei auch eine stufenlose Verstellung denkbar ist. Durch die jeweils anderen Saugkanäle läuft eine der Wellenansätze 22, 22', der unproblematisch unabhängig von der Stellung der Schaltklappen durch die von der Ansaugluft umströmt werden kann. Die dargestellte mittige Verbindung zwischen Wellenzapfen 24 und Wellenaufnahme 25 zwischen den beiden Klappenmodulen weist einen Axialspielausgleich 31 auf. Dieser vermag Fertigungs- und Montagetoleranzen in axialer Richtung zu kompensieren. Der Betrag des Axialspielausgleiches hängt von der Länge des Wellenansatzes 22 ab.

## Patentansprüche

1. Schaltklappenverband, bestehend aus mindestens zwei Schaltklappen (14), insbesondere zur Verwendung als Drosselung in Saugkanälen (11) eines Saugrohrs für eine Brennkraftmaschine, wobei die Schaltklappen (14) Klappenflügel (15) aufweisen, die in Klappenrahmen (16) montagegespritzt sind, und wobei die Schaltklappen (14) eine gemeinsame Drehachse (20) aufweisen, wobei als Kraftübertragung eine Welle vorgesehen ist, die die Klappenflügel (15) entlang der Drehachse miteinander verbindet, **dadurch gekennzeichnet, dass** der Schaltklappenverband aus Klappenmodulen (23) besteht, wobei letztere mindestens eine Wellenaufnahme (25) und eine Schaltklappe (14) aufweisen, wobei zumindest ein Teil der Klappenmodule (23) einen angespritzten Wellenansatz (22) aufweist, der über einen Wellenzapfen (24) mit der Wellenaufnahme (25) des benachbarten Klappenmoduls verdrehsicher verbunden ist und dass der Wellenansatz (22) durch ein Einlegeteil (28) versteift ist.

2. Schaltklappenverband nach Anspruch 1, **dadurch gekennzeichnet, daß** die beidseitige Lagerung (27) der Klappenflügel (15) im Klappenrahmen (16) zumindest auf einer Seite konisch ausgeführt ist, wobei der Konus (26) sich zu einer Einbauöffnung des Klappenrahmens hin verjüngt.

3. Schaltklappenverband nach einem der vorhergehenden Ansprüche, **dadurch gekennzeichnet, daß** die Klappenrahmen (16) Positionierungszapfen (17) aufweisen, die mit Löchern (18) in Aufnahmen (19) für den Schaltklappenverband korrespondieren.

4. Schaltklappenverband nach Anspruch 3, **dadurch gekennzeichnet, daß** die Positionierungszapfen (17) gegenüber den Löchern (18) Übermaß aufweisen.

5. Schaltklappenverband nach einem der vorherigen Ansprüche, **dadurch gekennzeichnet, daß** in der Verbindung zwischen Wellenaufnahme (25) und Wellenzapfen (24) ein Axialspielausgleich (31) vorgesehen ist.

## Claims

1. Assembly of switch flaps, consisting of at least two switch flaps (14), especially for being used as throttles for the suction channels (11) of a suction pipe for an internal combustion engine, wherein the switch flaps (14) have flap wings (15) that are injection-mounted in the flap frame (16), and wherein the switch flaps (14) have a common axis of rotation (20), wherein, for power transmission purposes, a shaft is provided for, connecting the flap wings (15) to each other along the axis of rotation, **characterized in that** the assembly of switch flaps consists of flap modules (23), wherein the latter have at least one shaft receptacle (25) and one switch flap (14), wherein at least some of the flap modules (23) have an injection-mounted shaft base (22) that is torsionally-stiff connected to the shaft receptacle (25) of the adjoining flap module via a shaft journal (24), and that the shaft base (22) is stiffened by an insert (28).

2. Assembly of switch flaps according to claim 1, **characterized in that** at least one side of the double-sided bearing (27) of the flap wings (15) in the flap frame (16) is conical, wherein the cone (26) is tapered toward the installation opening of the flap frame.

3. Assembly of switch flaps according to one of the above claims, **characterized in that** the flap frames (16) have positioning pins (17) that correspond with holes (18) in receptacles (19) for the assembly of switch flaps.

4. Assembly of switch flaps according to claim 3, **characterized in that** the positioning pins (17) are oversized, compared with the holes (18).

5. Assembly of switch flaps according to one of the above claims, **characterized in that** an axial clearance compensation (31) is provided for in the connection between the shaft receptacle (25) and the shaft journal (24).

## Revendications

1. Assemblage de clapets de commutation, composé d'au moins deux clapets de commutation (14), en particulier pour l'utilisation comme étranglement dans des conduites d'aspiration (11) d'un tube d'aspiration destiné à un moteur à combustion interne, les clapets de commutation (14) présentant des ailettes (15) montées par injection dans le cadre du clapet (16) et les clapets de commutation (14) présentant un axe de rotation commun (20), pour la transmission de force un arbre reliant les ailettes du clapet (15) le long de l'axe de rotation soit prévu, **caractérisé en ce que** l'assemblage de clapets de commutation se compose de modules de clapets (23), ces modules présentant au moins un logement d'arbre (25) et un clapet de commutation (14), au moins d'une partie des modules de clapets (23) présente une embase d'arbre montée par injection (22) reliée de manière protégée contre la torsion, par l'intermédiaire d'un tourillon (24), avec le logement d'arbre (25) du module de clapets avoisinant, que l'embase d'arbre (22) soit rigidifiée par un insert (28).

2. Assemblage de clapets de commutation selon la revendication 1, **caractérisé en ce que** les paliers des deux côtés (27) des ailettes du clapet (15) soient, au moins d'un côté, exécutés sous forme conique dans le cadre du clapet (16), le diamètre du cône diminuant (26) en direction d'un orifice de montage du cadre du clapet.

3. Assemblage de clapets de commutation selon une des revendications précédentes, **caractérisé en ce que** les cadres des clapets (16) présentent des goujons d'assemblage (17) qui correspondent à des trous (18) prévus dans les logements (19) pour l'assemblage de clapets de commutation.

4. Assemblage de clapets de commutation selon la revendication 3, **caractérisé en ce que** les goujons d'assemblage (17) soient surdimensionnés par rapport aux trous (18).

5. Assemblage de clapets de commutation selon une des revendications précédentes, **caractérisé en ce qu'une** compensation de jeu axiale (31) soit prévue dans l'assemblage entre le logement d'arbre (25) et le tourillon (24).
